(19)

Europäisches
Patentamt
European
Patent Office
Office européen
des brevets

(11) **EP 1 806 380 A1**

(12) **EUROPEAN PATENT APPLICATION**
published in accordance with Art. 158(3) EPC

(43) Date of publication:
**11.07.2007 Bulletin 2007/28**

(21) Application number: **05770379.5**

(22) Date of filing: **09.08.2005**

(51) Int Cl.:
*C08J 5/18* (2006.01)    *B32B 27/36* (2006.01)

(86) International application number:
**PCT/JP2005/014553**

(87) International publication number:
**WO 2006/016569 (16.02.2006 Gazette 2006/07)**

(84) Designated Contracting States:
**DE FR GB IT LU NL**

(30) Priority: **11.08.2004 JP 2004234262**
**11.08.2004 JP 2004234441**
**21.12.2004 JP 2004368828**

(71) Applicant: **Mitsubishi Polyester Film Corporation**
**Tokyo 108-0014 (JP)**

(72) Inventor: **SUZUKI, Takashi**
**Central Research**
**Maihara-shi**
**Shiga 5210234 (JP)**

(74) Representative: **ter Meer, Nicolaus et al**
**TER MEER STEINMEISTER & PARTNER GbR,**
**Patentanwälte,**
**Mauerkircherstrasse 45**
**81679 München (DE)**

(54)    **BIAXIALLY ORIENTED POLYESTER FILMS**

(57)    The present invention relates to (1) a biaxially stretched polyester film comprising a polyester layer (layer A) which comprises butylene terephthalate units and has a melting point of not higher than 240°C, said biaxially stretched polyester film satisfying such properties that an edge tear resistance in longitudinal direction is smaller than an edge tear resistance in width direction and the edge tear resistances in each of longitudinal and width directions are not more than 40N; (2) a biaxially stretched polyester film having a crystallization temperature (Tc) of not lower than 125°C and edge tear resistances of not more than 80N in each of longitudinal and width directions; and (3) a biaxially stretched polyester film comprising a polyester layer (layer A) comprising butylene terephthalate units and polyester layers (layer B) which are laminated on the both surfaces of the layer A and has a melting point higher 10°C or more, than the melting point of the layer A, said biaxially stretched polyester film satisfying such properties that edge tear resistances in each of longitudinal and width directions are not more than 80N and the tensile break elongation is not more than 50%. The said biaxially stretched polyester films are excellent in film-forming stability, can be suitably used as packaging materials instead of the presently used packaging materials such as the cellophane, moisture-proof cellophane and K-coat cellophane, can be used even though having a laminate structure of only a base film and a sealant layer, and also can exhibits a good hand cut-off property.

EP 1 806 380 A1

**Description**

TECHNICAL FIELD

The present invention relates to a biaxially stretched polyester film, and more particularly, to a biaxially stretched polyester film which can exhibit a good hand cut-off property and can be suitably used as packaging materials for industrial materials, drugs, sanitary materials, foods, etc.

BACKGROUND ART

Conventional packaging materials for industrial materials, drugs, sanitary materials, foods, etc., have been frequently required to have a good hand cut-off property. For example, bag-shaped packaging materials for confectioneries, powdery drugs, etc., having a good hand cut-off property are largely advantageous because of facilitated removal of contents therefrom. As the material having such a good hand cut-off property, there are known cellophane, a so-called moisture-proof cellophane obtained by coating cellophane with a vinyl chloride-vinyl acetate copolymer, a film obtained by coating cellophane with vinylidene chloride (K-coat cellophane), etc. Especially, in the small packaging bags for drugs, cellophane becomes used mostly because cellophane has excellent transparency and the content therein can be easily confirmed.

However, although the cellophane, moisture-proof cellophane, K-coat cellophane, etc., are excellent in hand cut-off property, they tend to suffer from change in their properties depending upon ambient humidity as well as deteriorated printability, and also there tends to arise such a problem that the deflection of thickness of the film which is an essential quality is large as compared to a polyester. In addition, the cellophane as a base material is expensive, and it is doubtful whether or not stable supply of the cellophane can be ensured in future. Further, the K-coat cellophane has a possibility of generating dioxins upon burning and, therefore, tends to be difficult to use from the viewpoint of avoiding environmental pollution

On the other hand, a polyester film has been frequently used as a packaging material because of excellent properties thereof such as mechanical properties, dimensional stability, heat resistance, water resistance, transparency, etc., but has a poor hand cut-off property owing to the excellent mechanical properties. To solve problems due to the poor hand cut-off property of the polyester film, there have been proposed, for example, the monoaxially oriented polyester film (refer to Japanese Patent Publication (KOKOKU) No. 55-8551), the film made of a polyester resin obtained by copolymerizing polyester with diethylene glycol, etc., (refer to Japanese Patent Publication (KOKOKU) No. 56-50692), and the polyester film produced from a low-molecular weight polyester resin (refer to Japanese Patent Publication (KOKOKU) No. 55-20514).

However, the monoaxially oriented polyester film is readily linearly cut off in the oriented direction, but tends to be hardly cut off in the other directions. The polyester film made of a polyester resin obtained by copolymerizing polyester with diethylene glycol, etc., has such a problem that inherent properties of the polyester are lost by the copolymerization. Further, the polyester film produced from a low-molecular weight polyester resin tends to suffer from troubles in its production process such as cutting or breakage of the film upon a stretching step, and, therefore, tends to be unpractical.

In addition, there have been proposed a method in which a copolyester layer having a low melting point and a polyester layer having a high melting point are laminated each other so as to break the molecular orientation of copolyester layer having a low melting point almost completely (refer to Japanese Patent Application Laid-open (KOKAI) No. 5-104618 and Japanese Patent Application No. 2004-202702), a method of mixing an amorphous polyester in a polyester film (Japanese Patent Application Laid-open (KOKAI) No. 2003-155403), and a method of allowing an amorphous polyester layer to intervene in a polyester film (refer to Japanese Patent Application Laid-open (KOKAI) No. 2003-220678). However, in these methods, when producing a polyester film which can exhibit a good hand cut-off property, that is, has an edge tear resistances of less than 30N, there remained a problem of film breakage trouble in the film taking off step, film winding step and film slitting step. Therefore, in case of a packaging material produced by this method using the film, when the polyester film used as the base material for a packaging bag further intervening a material which is easily tore by hand such as aluminum foil and paper, for example having such a structure of base film/ aluminum foil/sealant layer, the packaging bag having such constitution is effectively used as the film which can exhibit a good hand cut-off property in any direction. However, in case where a packaging bag constitutes a laminate structure of only the base film and sealant layer comprising polyethylene or the like without intervening aluminum foil or paper, when cutting it by hand, there remained such a problem that the film is elongated and cannot cut easily. Further, when the sealant layer comprising polyethylene or the like is extruded on the base film to laminate each other, there is such a problem that the film is crystallized by the heat of sealant layer so that the film becomes whitening.

DISCLOSURE OF THE INVENTION

Problem to be Solved by the Invention

The present invention has been made to solve the above problems. An object of the present invention is to provide a biaxially stretched polyester film which is excellent in film-forming stability, can be used even though having a laminate structure of only a base film and a sealant layer, and can exhibits a good hand cut-off property, and also which can be suitably used as packaging materials instead of the presently used packaging materials such as the cellophane, moisture-proof cellophane and K-coat cellophane.

Means for Solving Problem

As a result of the present inventors' earnest study for solving the above problems, it has been found that the above problem can be easily solved by a biaxially stretched polyester film having a specific constitution. The present invention has been attained on the basis of this finding.

In the first aspect of the present invention, there is provided a biaxially stretched polyester film comprising a polyester layer (layer A) which comprises butylene terephthalate units and has a melting point of not higher than 240°C, said biaxially stretched polyester film satisfying such properties that an edge tear resistance in longitudinal direction is smaller than an edge tear resistance in width direction and the edge tear resistances in each of longitudinal and width directions are not more than 40N.

In the second aspect of the present invention, there is provided a biaxially stretched polyester film having a crystallization temperature (Tc) of not lower than 125°C and edge tear resistances of not more than 80N in each of longitudinal and width directions.

In the third aspect of the present invention, there is provided a biaxially stretched polyester film comprising a polyester layer (layer A) comprising butylene terephthalate units and polyester layers (layer B) which are laminated on the both surfaces of the layer A and has a melting point higher 10°C or more, than the melting point of the layer A, said biaxially stretched polyester film satisfying such properties that edge tear resistances in each of longitudinal and width directions are not more than 80N and the tensile break elongation is not more than 50%.

EFFECT OF THE INVENTION

The film according to the present invention is excellent in film-forming stability, processability, mechanical properties, can be used even though having a laminate structure of only a base film and a sealant layer, can maintain good transparency when the sealant layer is extruded on the base film to laminate each other, can exhibits a good hand cut-off property, and also can be used as packaging materials for industrial materials, drugs, sanitary materials, foods, etc.

PREFERRED EMBODIMENTS FOR CARRYING OUT THE INVENTION

The present invention is described in detail hereinunder. The following descriptions are merely concerned with a typical example of preferred embodiments of the present invention, and it is therefore not intended to limit the scope of the present invention thereto. First, the biaxially stretched polyester film in the first aspect according to the present invention is explained below. The biaxially stretched polyester film in the first aspect according to the present invention comprises a polyester layer (layer A) which comprises butylene terephthalate units and has a melting point of not higher than 240°C, the said biaxially stretched polyester film satisfying such properties that an edge tear resistance in longitudinal direction is smaller than an edge tear resistance in width direction and the edge tear resistances in each of longitudinal and width directions are not more than 40N.

The butylene terephthalate unit is a polymer constitution unit which having an ester group formed by polycondensation reaction of terephthalic acid as an acid component and 1,4-butanediol as a glycol component. The polymer may be in the form of either a homopolymer or a copolymer containing a third comonomer component.

The copolyester is typically a polyester constituted from terephthalic acid or isophthalic acid as an acid component and ethyleneglycol as a glycol component. The copolyester may also contain the other comonomer component.

Examples of an acid component as the other comonomer component may include aliphatic dicarboxylic acids such as adipic acid, azelaic acid, sebacic acid and decanedicarboxylic acid; and aromatic carboxylic acids such as phthalic acid, 2,6-naphthalenedicarboxylic acid, 2,7-naphthalenedicarboxylic acid, 1,5-naphthalenedicarboxylic acid, diphenoxyethanedicarboxylic acid, diphenyldicarboxylic acid, diphenyletherdicarboxylic acid and anthracenedicarboxylic acid. Examples of an alcohol component as the other comonomer component may include aliphatic diols such as diethyleneglycol, propyleneglycol, neopentylglycol, butanediol, pentanediol and hexanediol; and polyalkyleneglycols such as polyethyleneglycol, polypropyleneglycol and polytetramethyleneglycol. These acid and alcohol components

3

may be respectively used alone or in the form of a mixture of any two or more thereof.

The polyester film in the first aspect according to the present invention essentially comprises a polyester layer (layer A) which comprises the butylene terephthalate units and has a melting point of not higher than 240°C. The said melting point of polyester layer A is preferably not higher than 235°C, more preferably 200 to 235°C.

The polyester film may further comprise a layer other than the layer A such as polyester layer B. As the polyester layer B, a polyester comprising an ester group obtained by polycondensation between a dicarboxylic acid and a diol or a hydroxycarboxylic acid is preferred. Examples of the dicarboxylic acid may include terephthalic acid, isophthalic acid, adipic acid, azelaic acid, sebacic acid, 2,6-naphthalenedicarboxylic acid and 1,4-cyclohexanedicarboxylic acid. Examples of the diol may include ethyleneglycol, 1,4-butanediol, diethyleneglycol, triethyleneglycol, neopentylglycol, 1,4-cyclohexanedimethanol and polyethyleneglycol. Examples of the hydroxycarboxylic acid may include p-hydroxybenzoic acid and 6-hydroxy-2-naphthoic acid. The above polyester may be produced, for example, by transesterifying a lower alkyl ester of an aromatic dicarboxylic acid with a glycol, or by directly esterifying an aromatic dicarboxylic acid with a glycol to substantially form a bisglycol ester of the aromatic dicarboxylic acid or an oligomer thereof, and then heat-polycondensing the thus obtained oligomer under reduced pressure. It is preferable that the melting point of polyester layer B is higher than that of polyester layer A, more concretely 10°C or more higher than that of polyester layer A.

In order to improve the mechanical properties of polyester film in the first aspect according to the present invention, the polyester layers B having a thickness of usually not more than 8 $\mu$m, preferably not more than 6 $\mu$m or having a thickness of usually not more than 30%, preferably not more than 15% of the total thickness of the film may be laminated on the both surfaces of polyester layer A.

The polyester film in the first aspect according to the present invention preferably contains fine particles to enhance a workability of the film upon a winding-up step, a coating step, a vapor deposition step, etc. Examples of the fine particles used in the present invention may include inorganic particles such as particles of calcium carbonate, magnesium carbonate, calcium sulfate, barium sulfate, lithium phosphate, magnesium phosphate, calcium phosphate, lithium fluoride, aluminum oxide, silicon oxide and kaolin; organic particles such as particles of acrylic resins and guanamine resins; and precipitated particles obtained by granulating catalyst residues, although not particularly limited thereto. The particle size and amount of the fine particles used may be appropriately determined according to the objects and applications thereof. The fine particles contained in the polyester film may comprise a single component, or two or more components may be used as the fine particles simultaneously.

The method of blending the fine particles in the raw polyester is not particularly limited, and the fine particles may be preferably blended in the raw polyester, for example, by the method of adding the fine particles thereto in the polymerization step for production of the polyester, and the method of melt-kneading the raw polyester with the fine particles. Further, the raw polyester may be appropriately blended with various additives such as stabilizers, lubricants, antistatic agents, etc.

In the polyester film in the first aspect according to the present invention, an edge tear resistance is controlled so that an edge tear resistance in longitudinal direction is smaller than an edge tear resistance in width direction. When the edge tear resistance in width direction is not greater than the edge tear resistance in longitudinal direction, film breakage tends to occur. The edge tear resistances in each of longitudinal and width directions in the polyester film are not more than 40N, preferably not more than 30N. If the edge tear resistance is more than 40N, the hand cut-off property is deteriorated when laminating with a sealant layer.

Next, the polyester film in the second aspect according to the present invention is explained. The polyester film in the second aspect according to the present invention has a crystallization temperature (Tc) of not lower than 125°C and edge tear resistances of not more than 80N in each of longitudinal and width directions.

As the polyester of polyester film in the second aspect according to the present invention, a polyester comprising an ester group obtained by polycondensation between a dicarboxylic acid and a diol or a hydroxycarboxylic acid is preferred. Examples of the dicarboxylic acid may include terephthalic acid, isophthalic acid, adipic acid, azelaic acid, sebacic acid, 2,6-naphthalenedicarboxylic acid and 1,4-cyclohexanedicarboxylic acid. Examples of the diol may include ethyleneglycol, 1,4-butanediol, diethyleneglycol, triethyleneglycol, neopentylglycol, 1,4-cyclohexanedimethanol and polyethyleneglycol. Examples of the hydroxycarboxylic acid may include p-hydroxybenzoic acid and 6-hydroxy-2-naphthoic acid.

The above polyester may be produced, for example, by transesterifying a lower alkyl ester of an aromatic dicarboxylic acid with a glycol, or by directly esterifying an aromatic dicarboxylic acid with a glycol to substantially form a bisglycol ester of the aromatic dicarboxylic acid or an oligomer thereof, and then heat-polycondensing the thus obtained oligomer under reduced pressure.

Typical examples of the polyester may include polyethylene terephthalate and polyethylene-2,6-naphthalate. These polymers may be in the form of either a homopolymer or a copolymer containing a third comonomer component.

The polyester film in the second aspect according to the present invention is preferably a film having a laminate structure comprising a polyester layer (layer A) which comprises butylene terephthalate units and has a melting point of not higher than 240°C and a polyester layer (layer B). The melting point of polyester layer B is preferably higher, more preferably 10°C or more higher than that of polyester layer A.

The butylene terephthalate unit in the polyester layer A is a polymer having constitution unit which having an ester group formed by polycondensation reaction of terephthalic acid as an acid component and 1,4-butanediol as a glycol component. The polymer may be in the form of either a homopolymer or a copolymer containing a third comonomer component. As the other comonomer component, comonomers mentioned in the above first aspect can be used alone or in the form of a mixture of any two or more thereof. The typical copolyester is a polyester constituted from polyester units comprising butylene terephthalate units, terephthalic acid or isophthalic acid as an acid component and ethyleneglycol as a glycol component. In order to improve hand cut-off property, it is preferable to conduct heat-treatment of the film obtained after the monoaxial stretching at the melting initiation temperature or higher of the polyester layer A, preferably at the melting point or higher of the polyester layer A thereby achieving sufficient hand cut-off property.

The thickness of polyester layer B is preferably 8 $\mu$m or 50% of the total thickness of the film.

The polyester film in the second aspect according to the present invention has a crystallization temperature (Tc) of not lower than 125°C, preferably not lower than 130°C. When the crystallization temperature (Tc) is lower than 125°C, the transparency of film is deteriorated after extrusion-laminating the sealant layer so that it is not suitable for package material applications.

The polyester film in the second aspect according to the present invention has edge tear resistances of not more than 80N, preferably 5 to 60N in each of longitudinal and width directions. When the edge tear resistance is more than 80N, sufficient hand cut-off property cannot be attained. When the edge tear resistance is not more than 5N, the edge tear resistance is too good and there is a possibility of film breakage in case of processing under high tensile strength.

Next, the polyester film in the third aspect according to the present invention is explained. The polyester film in the third aspect according to the present invention is a biaxially stretched polyester film comprising a polyester layer (layer A) comprising butylene terephthalate units and polyester layers (layer B) which are laminated on the both surfaces of the layer A and has a melting point higher 10°C or more, than the melting point of the layer A, the said biaxially stretched polyester film satisfying such properties that edge tear resistances in each of longitudinal and width directions are not more than 80N and the tensile break elongation is not more than 50%.

In the polyester film in the third aspect according to the present invention, there can be used the same polyester and process for production thereof explained in the polyester film in the second aspect according to the present invention.

Typical examples of the polyester may include polyethylene terephthalate and polyethylene-2,6-naphthalate. These polymers may be in the form of either a homopolymer or a copolymer containing a third comonomer component.

The butylene terephthalate unit in the polyester layer A is a polymer constitution unit which having an ester group formed by polycondensation reaction of terephthalic acid as an acid component and 1,4-butanediol as a glycol component. The polymer may be in the form of either a homopolymer or a copolymer containing a third comonomer component. As the other comonomer component, comonomers mentioned in the above first aspect can be used alone or in the form of a mixture of any two or more thereof. The typical copolyester is a polyester constituted from polyester units comprising butylene terephthalate units, terephthalic acid or isophthalic acid as an acid component and ethyleneglycol as a glycol component.

The polyester layer A comprises butylene terephthalate units and the melting point is preferably not lower than 240°C. The melting point of polyester layer B is higher 10°C or more, preferably 20°C or more than the melting point of the layer A.

The total thickness of polyester layer B is usually not more than 25%, preferably not more than 15% based on the total film thickness. When the total thickness of polyester layer B is too thick, the tensile break elongation of the film is too large so that the hand cut-off property after laminating with the sealant layer tend to be deteriorated.

The polyester film in the third aspect according to the present invention preferably contains fine particles to enhance a workability of the film upon a winding-up step, a coating step, a vapor deposition step, etc. As concrete examples, particle size, blending amount, blending method, etc. of fine particles, the same explanation as mentioned in the polyester film in the first aspect according to the present invention can be also mentioned. Further, various stabilizers, lubricants, antistatic agents, etc. can be also added, if required.

As the process for production of polyester film in the third aspect according to the present invention (extrusion method, cooling-solidifying method, stretching method, heat-treating (thermally fixing) method and each condition), the same explanation as mentioned in the polyester film in the first aspect according to the present invention can be also mentioned.

In the polyester film in the third aspect according to the present invention, the edge tear resistances in each of longitudinal and width directions are not more than 80N, preferably 5 to 60N, more preferably 5 to 40N. When the edge tear resistance is more than 80N, sufficient hand cut-off property cannot be attained. When the edge tear resistance is not more than 5N, the edge tear resistance is too good and there is a possibility of film breakage in case of processing under high tensile strength.

In the polyester film in the third aspect according to the present invention, the tensile break elongation is not more than 50%, preferably not more than 40%, more preferably not more than 30%. If the tensile break elongation is more than 50%, it is difficult to hand cut-off the film when laminating with the sealant because of elongation of film.

In the polyester film in the third aspect according to the present invention, the tensile break strength is usually not less than 50MPa, preferably not less than 60MPa. When the tensile break strength is too low, the film is easily broken at the slitting step or laminate processing step so that the film may not be suitable for packaging material applications.

The thickness of polyester films in the first to third aspects according to the present invention is usually 9 to 50 $\mu$m, preferably 12 to 38 $\mu$m.

The biaxially stretched polyester film in the first to third aspect according to the present invention may be obtained by feeding the above respective raw polyester materials to known melt-extruding apparatuses such as typically extruders to heat the polymer to the temperature not lower than a melting point thereof. In case of using two or more raw polyester materials, respective melt-extruding apparatuses are used individually. In this step, as the row material of polyester layer A, there can be used chips prepared by prior melt-mixing thereof. Next, the resultant molten polymer is extruded through a slit die onto a rotary cooling drum to rapidly cool the polymer to the temperature not higher than a glass transition temperature of the polymer for solidifying the polymer, thereby forming a substantially amorphous unstretched sheet. In case of laminate film, lamination is conducted while extrusion thereof. Then, the thus obtained sheet is biaxially stretched to form a biaxially stretched film. The obtained biaxially stretched film is thermally fixed thereby obtaining the polyester film. In this case, the stretching may be conducted by either a sequential biaxially stretching method or a simultaneous biaxially stretching method. Further, if required, the film before or after being thermally fixed may be stretched again in the longitudinal and/or transverse directions thereof. In the present invention, in order to impart a sufficient dimensional stability and a good stiffness required as a packaging material to the resultant film, the stretch ratio is usually not less than 9 times and preferably not less than 12 times calculated as an area ratio of the film between before and after the stretching. Further, in order to lower the tensile break elongation, it is preferred that the stretch ratios in both machine and transverse direction are not less than 3.5.

In the biaxially stretched polyester film of the first to third aspect according to the present invention, the heat-treating temperature used in the thermally fixing step after stretching is usually not lower than the melting initiation temperature of the polyester layer A, preferably not lower than the melting point of the polyester layer A. If the heat-treating temperature is lower than the melting initiation temperature of the polyester layer A, sufficient hand cut-off property may not be attained.

The biaxially stretched polyester film in the first to third aspect according to the present invention may be printed to impart a good design property thereto, and then a sealant layer may be laminated thereon to obtain a packaging material having a good hand cut-off property. Further, the sealant layer is extruded-laminated thereon without deterioration of transparency thereof to obtain a packaging material having a good hand cut-off property and also good transparency. Typical examples of the packaging material include small packaging bags for drugs. Further, a gas-barrier film obtained by forming a barrier layer made of metal or metal oxide on the polyester film in the first to third aspect according to the present invention by vapor deposition method or by coating the polyester film with an existing barrier layer may be used as a gas-barrier packaging material having a good hand cut-off property. In addition, a film obtained by laminating an aluminum foil on the polyester film may also be used as a gas-barrier packaging material having a good hand cut-off property.

EXAMPLES

The present invention is described in more detail by Examples. However, these Examples are only illustrative and not intended to limit the scope of the present invention. In the following Examples, Examples 1 to 4 and Reference Examples 1 to 4 relate to the invention as described in the first aspect according to the present invention, Examples 5 to 8 and Reference Examples 5 to 7 relate to the invention as described in the second aspect according to the present invention, and Examples 9 to 13 and Reference Examples 8 to 12 relate to the invention as described in the third aspect according to the present invention. Further, evaluation methods and treatment methods of samples in Examples and Comparative Examples are explained below. Meanwhile, the terms "part(s)" and "%" used in Examples and Comparative Examples represent "part(s) by weight" and "% by weight", respectively.

(1) Method of measuring an intrinsic viscosity [$\eta$] (dL/g) of polymer:

One gram of the polymer was dissolved in 100 mL of a mixed solvent containing phenol and tetrachloroethane at a weight ratio of 50:50, and a viscosity of the resultant solution was measured at 30°C using an Ubbellohde viscometer.

(2) Method of measuring a film thickness:

Ten films were overlapped on each other to measure a total thickness of the thus overlapped films using a micrometer. The thickness of the film was expressed by an average value obtained by dividing the total thickness of the ten films by 10.

(3) Method of measuring a thickness of a laminated polyester layer:

A film piece was fixedly molded in an epoxy resin, and then the resultant molded product was cut by a microtome to observe a section of the film using a transmission electron micrograph. In the section of the film, two boundary surfaces extending in substantially parallel with the surface of the film were observed by contrast thereon. Then, the distance between each of the two boundary surfaces and the surface of the film was measured with respect to 10 micrographs to calculate an average value of the measured distances as a thickness of the laminated layer.

(4) Method of measuring a melting initiation temperature and a melting point:

The melting initiation temperature (Tim) and the melting point (Tpm) were measured using a differential scanning calorimeter "DSC-7 Model" manufactured by Perkin Elmer Inc. The DSC measuring conditions were as follows. That is, 6 mg of a film specimen was set onto the DSC apparatus, and maintained at 300°C for 5 min in a molten state, and then rapidly cooled using a liquid nitrogen. The rapidly cooled specimen was heated from ordinary temperature at a temperature rise rate of 10°C/min to detect a melting point thereof according to "how to read a DSC curve" as prescribed in JIS K7121.

(5) Method of measuring a crystallization temperature:

The crystallization temperature (Tc) was measured using a differential scanning calorimeter "DSC-7 Model" manufactured by Perkin Elmer Inc. The DSC measuring conditions were as follows. That is, 6 mg of a film specimen was set onto the DSC apparatus, and then the rapidly cooled specimen was heated from ordinary temperature at a temperature rise rate of 10°C/min to detect a melting point thereof according to "how to read a DSC curve" as prescribed in JIS K7121.

(6) Method of measuring a tensile break strength and tensile break elongation:

Using a tensile tester "Model 2001 Type" manufactured by Intesco Co., Ltd., a film specimen having a length (distance between chucks) of 50 mm and a width of 15 mm was pulled at a straining rate of 200 mm/min within a room conditioned at a temperature of 23°C and a humidity of 50% RH to measure a load applied to the specimen at breaking and calculate a tensile break strength and tensile break elongation of the specimen according to the following formula:

```
Tensile break strength (MPa) =

{Load at breaking (N)/Sectional area of the film

specimen (mm²)}


Tensile break elongation (%) =

{Distance between chucks after sample breakage (mm) -

distance between chucks before testing (mm)}/{distance

between chucks before testing (mm)} X 100
```

(7) Method of measuring an edge tear resistance:

An average value of tear resistance values of a film as measured according to JIS C2318-1975 was determined as an edge tear resistance of the film.

(8) Method of measuring hand-cut property:

A film without giving any notch was torn to evaluate whether or not tearing of the film by hand was smoothly conducted, according to the following ratings. The evaluation of a tearing property of the film was performed in each of the longitudinal direction (MD) and the width direction (TD) of the film.

Table 1

| Rank A | Readily torn by hand |
|--------|----------------------|
| Rank B | Relatively readily torn by hand |
| Rank C | Hardly torn by hand |

(9-1) Method of measuring hand-cut property of laminate film (1) :

Low density polyethylene was extrusion-laminated (thickness: 30 $\mu$m) on the obtained film to form a laminate film. It was tried to tear the laminate film without giving any notch to the laminate film to see weather it could be torn smoothly with hands. Tear properties were rated according to the following gradation. Rating was made in both machine direction (MD) and transverse direction (TD).

Table 2

| Rank A | Readily torn by hand |
|--------|----------------------|
| Rank B | Relatively readily torn by hand |
| Rank C | Hardly torn by hand |

(9-2) Method of measuring hand-cut property of laminate film (2) :

After applying an anchor coat agent ("EL510" mfd. by Toyo Morton Co., Ltd) on the film, low density polyethylene was extrusion-laminated (thickness: 30 $\mu$m) as a sealant on the obtained film to form a laminate film. The obtained laminate film was folded in two, and it was tried to tear the laminate film whether it could be torn smoothly with hands. Tear properties were rated according to the following gradation.

Table 3

| Rank A | Readily torn by hand without using nails |
|--------|------------------------------------------|
| Rank B | Torn by hand by use of nails but torn not smoothly because of film elongation |
| Rank C | Hardly torn by hand |

(10) Method of measuring haze:

Haze of the film was measured by "Hazemeter NDH-2000" (mfd. by Nippon Denshoku Industries Co., Ltd.) according to JIS K7136.

(11) Method of evaluation of transparency of extrusion-laminated film:

Low density polyethylene (LDPE) was extrusion-laminated (40 $\mu$m) on the film to prepare a laminate film. A package made of the obtained laminate film was prepared by use of a three-side sealer packaging machine. The evaluation of transparency of extrusion-laminated film weather the content in the package can be confirmed or not were rated according to the following gradation.

Table 4

| Rank A | The content can be readily confirmed. |
|--------|----------------------------------------|
| Rank C | The content cannot be readily confirmed. |

The raw polyesters used in the below-mentioned Examples and Comparative Examples were produced by the following processes.

<u>Process for producing polyester 1</u>

Terephthalic acid as a dicarboxylic acid component and 1,4-butanediol as a polyhydric alcohol component were subjected to melt-polycondensation reaction by an ordinary method to produce a polyester 1. The thus obtained raw polyester had an intrinsic viscosity ($[\eta]$) of 0.80 dL/g, and the polyester film produced from the raw material had a melting initiation temperature (Tim) of 213°C and a melting point (Tpm) of 222°C.

<u>Process for producing polyester 2</u>

Isophthalic acid and terephthalic acid as a dicarboxylic acid component and ethyleneglycol as a polyhydric alcohol component were subjected to melt-polycondensation reaction by an ordinary method to produce a polyester 2. The content of isophthalic acid in the dicarboxylic acid component was 15 mol%. The thus obtained raw polyester had an intrinsic viscosity ($[\eta]$) of 0.69 dL/g, and the polyester film produced from the raw material had a melting initiation temperature (Tim) of 198°C and a melting point (Tpm) of 220°C.

<u>Process for producing polyester 3</u>

Isophthalic acid and terephthalic acid as a dicarboxylic acid component and ethyleneglycol as a polyhydric alcohol component were subjected to melt-polycondensation reaction by an ordinary method to produce a polyester 3. The content of isophthalic acid in the dicarboxylic acid component was 22 mol%. The thus obtained raw polyester had an intrinsic viscosity ($[\eta]$) of 0.69 dL/g, and the polyester film produced from the raw material had a melting initiation temperature (Tim) of 175°C and a melting point (Tpm) of 196°C.

<u>Process for producing polyester 4</u>

Terephthalic acid as a dicarboxylic acid component and ethyleneglycol as a polyhydric alcohol component were subjected to melt-polycondensation reaction by an ordinary method to produce polyester chips having an intrinsic viscosity ($[\eta]$) of 0.69 dL/g. The thus obtained polyester film produced from the raw material had a melting initiation temperature (Tim) of 242°C and a melting point (Tpm) of 254°C.

<u>Process for producing polyester 5</u>

Terephthalic acid as a dicarboxylic acid component and ethyleneglycol as a polyhydric alcohol component were subjected to melt-polycondensation reaction by an ordinary method to produce polyester chips having an average particle size of 2.5 $\mu$m and an intrinsic viscosity ($[\eta]$) of 0.70 dL/g and containing amorphous silica in an amount of 0.18 parts. The polyester film produced from the raw material had a melting initiation temperature (Tim) of 242°C and a melting point (Tpm) of 254°C.

<u>Process for producing polyester 6</u>

25 parts of the polyester 1 and 75 parts of the polyester 2 were blended with each other to obtain polyester 6. The content of polybutylene terephthalate in the polyester 5 was 25%, and the content of isophthalic acid in the dicarboxylic acid component was 11 mol%. The polyester film produced from the raw material had a melting initiation temperature (Tim) of 195°C and a melting point (Tpm) of 217°C.

<u>Process for producing polyester 7</u>

25 parts of the polyester 1 and 75 parts of the polyester 3 were blended with each other to obtain polyester 7. The content of polybutylene terephthalate in the polyester 6 was 25%, and the content of isophthalic acid in the dicarboxylic acid component was 17 mol%. The polyester film produced from the raw material had a melting initiation temperature (Tim) of 200°C and a double-peak melting points (Tpm) of 211 and 220°C.

<u>Process for producing polyester 8</u>

25 parts of the polyester 1, 50 parts of the polyester 3 and 25 parts of the polyester 4 were blended with each other. The resultant mixture was melt-kneaded by a twin-screw extruder to produce a polyester 8 in the form of chips. The content of polybutylene terephthalate in the polyester 8 was 25%, and the content of isophthalic acid in the dicarboxylic acid component of the polyester 8 was 11 mol%. The polyester film produced from the raw material had a melting initiation temperature (Tim) of 195°C and a melting point (Tpm) of 217°C.

<Process for producing polyester 9>

25 parts of the polyester 1 and 75 parts of the polyester 2 were blended with each other. The resultant mixture was melt-kneaded by a twin-screw extruder to produce a polyester 9 in the form of chips. The content of polybutylene terephthalate in the polyester 9 was 25%, and the content of isophthalic acid in the dicarboxylic acid component of the polyester 9 was 11 mol%. The polyester film produced from the raw material had a melting initiation temperature (Tim) of 185°C and a melting point (Tpm) of 216°C.

<Process for producing polyester 10>

10 parts of the polyester 1 and 90 parts of the polyester 2 were blended with each other. The content of polybutylene terephthalate in the polyester 10 was 10% and the content of isophthalic acid in the dicarboxylic acid component was 14 mol%. The polyester film produced from the raw material had a melting initiation temperature (Tim) of 195°C and a melting point (Tpm) of 217°C.

Example 1:

Pellets of the polyester 5 and pellets of the polyester 6 were respectively melted in two separate extruders, and extruded through a laminating die to form a two-kind/three-layer polyester resin laminate having a layer structure composed of polyester 5 (layer B)/polyester 6 (layer A)/polyester 5 (layer B). The thus extruded laminate was fed onto a cooling drum maintained at a surface temperature of 30°C and rapidly cooled thereon, thereby obtaining an unstretched film having a thickness of about 250 $\mu$m. Next, the unstretched film was stretched at 75°C 3.5 times in the longitudinal direction (MD) thereof, preheated in a tenter, stretched again at 80°C 4.4 times in the transverse direction (TD) thereof, and then heat-treated at 235°C for 5 sec, to obtain a laminated polyester film having a thickness of 16 $\mu$m. The thicknesses of the layer B, layer A and layer B of the obtained laminated polyester film were 1 $\mu$m, 14 $\mu$m and 1 $\mu$m, respectively. Various properties of the thus obtained film are shown in Table 5 below. As a result, it was confirmed that the resultant film exhibited a good hand cut-off property and a laminate film where a low density polyethylene film having a thickness of 30 $\mu$m was laminated exhibited also a good hand cut-off property.

Example 2:

The same procedure as defined in Example 1 was conducted except that the thicknesses of the layer B, layer A and layer B of the polyester film were changed to 4 $\mu$m, 24 $\mu$m and 4 $\mu$m, respectively, to obtain a laminated polyester film. Various properties of the thus obtained film are shown in Table 5 below. As a result, it was confirmed that the resultant film exhibited a good hand cut-off property and a laminate film where a low density polyethylene film having a thickness of 30 $\mu$m was laminated exhibited also a good hand cut-off property.

Example 3:

The same procedure as defined in Example 1 was conducted except that the unstretched film was stretched at 75°C 3.2 times in the longitudinal direction thereof, preheated in the tenter and stretched again at 80°C 4.7 times in the transverse direction thereof, to obtain a laminated polyester film. Various properties of the thus obtained film are shown in Table 5 below. As a result, it was confirmed that the resultant film exhibited a good hand cut-off property and a laminate film where a low density polyethylene film having a thickness of 30 $\mu$m was laminated exhibited also a good hand cut-off property.

Example 4:

The same procedure as defined in Example 1 was conducted except that the polyester 7 was used as a raw material of the layer A to obtain a laminated polyester film. Various properties of the thus obtained film are shown in Table 5 below. As a result, it was confirmed that the resultant film exhibited a good hand cut-off property and a laminate film where a low density polyethylene film having a thickness of 30 $\mu$m was laminated exhibited also a good hand cut-off property.

Reference Example 1:

The same procedure as defined in Example 1 was conducted except that in the heat-treatment after the stretching in transverse direction the heat-treatment temperature was changed to 205° to obtain a laminated polyester film. Various properties of the thus obtained film are shown in Table 6 below. As a result, it was confirmed that the resultant single film exhibited relatively a good hand cut-off property but a laminate film where a low density polyethylene film having a thickness of 30 μm was laminated exhibited a poor hand cut-off property.

Reference Example 2 :

The same procedure as defined in Example 1 was conducted except that the unstretched film was stretched at 75°C 3.8 times in the longitudinal direction thereof, preheated in the tenter, stretched again at 80°C 4.1 times in the transverse direction thereof, to obtain a laminated polyester film. Various properties of the thus obtained film are shown in Table 6 below. As a result, it was confirmed that the resultant film exhibited a good hand cut-off property. However, the film was easily broken in the winding step and it was difficult to wind up the film for a roll like form.

Reference Example 3:

The same procedure as defined in Example 1 was conducted except that the thicknesses of the layer B, layer A and layer B of the polyester film were changed to 4 μm, 8 μm and 4 μm, respectively, to obtain a laminated polyester film. Various properties of the thus obtained film are shown in Table 6 below. As a result, it was confirmed that the resultant single film exhibited relatively a good hand cut-off property but a laminate film where a low density polyethylene film having a thickness of 30 μm was laminated exhibited a poor hand cut-off property.

Reference Example 4:

The same procedure as defined in Example 1 was conducted except that the polyester 2 was used as a raw material of the layer A, to obtain a laminated polyester film. Various properties of the thus obtained film are shown in Table 6 below. As a result, it was confirmed that the resultant film exhibited a good hand cut-off property. However, the film was easily broken in the winding step and it was difficult to wind up the film for a roll like form.

Table 5

| Example | 1 | 2 |
|---|---|---|
| Layer structure | B/A/B | B/A/B |
| Thickness (layer B/layer A/layer B) (μm) | 1/14/1 | 4/24/4 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 3.5 | 3.5 |
| Stretching ratio in TD | 4.4 | 4.4 |
| Heat-treatment temperature (°C) | 235 | 235 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 65 | 75 |
| Tensile break strength in TD (MPa) | 66 | 77 |
| Edge tear resistance in MD (N) | 25 | 28 |
| Edge tear resistance in TD (N) | 28 | 35 |
| Hand-cut property in TD | A | A |
| Hand-cut property in MD | A | A |
| Hand-cut property of laminate film in TD | A | A |
| Hand-cut property of laminate film in MD | A | B |
| Film-forming stability | good | good |

Note: PET, PBT and IPA mean polyethylene terephthalate, polybutylene terephthalate and isophthalic acid.

Table 5 (Continued)

| Example | 3 | 4 |
|---|---|---|
| Layer structure | B/A/B | B/A/B |
| Thickness (layer B/layer A/layer B) ($\mu$m) | 1/14/1 | 1/24/1 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 3.2 | 3.5 |
| Stretching ratio in TD | 4.7 | 4.4 |
| Heat-treatment temperature (°C) | 235 | 235 |
| Concentration of PBT in layer A (mol%) | 25 | 25 |
| Concentration of IPA in layer A (mol%) | 11 | 17 |
| Melting initiation temperature of layer A (°C) | 195 | 200 |
| Melting point of layer A (°C) | 217 | 211, 220 |
| Melting point of layer B (°C) | 254 | 254 |
| Tensile break strength in MD (MPa) | 60 | 60 |
| Tensile break strength in TD (MPa) | 65 | 62 |
| Edge tear resistance in MD (N) | 20 | 18 |
| Edge tear resistance in TD (N) | 37 | 22 |
| Hand-cut property in TD | A | A |
| Hand-cut property in MD | A | A |
| Hand-cut property of laminate film in TD | A | A |
| Hand-cut property of laminate film in MD | B | A |
| Film-forming stability | good | good |

Note: PET, PBT and IPA mean polyethylene terephthalate, polybutylene terephthalate and isophthalic acid.

Table 6

| Reference Example | 1 | 2 |
|---|---|---|
| Layer structure | B/A/B | B/A/B |
| Thickness (layer B/layer A/layer B) (μm) | 1/14/1 | 1/14/1 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 3.5 | 3.8 |
| Stretching ratio in TD | 4.4 | 4.1 |
| Heat-treatment temperature (°C) | 205 | 235 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 90 | 65 |
| Tensile break strength in TD (MPa) | 90 | 65 |
| Edge tear resistance in MD (N) | 60 | 22 |
| Edge tear resistance in TD (N) | 65 | 19 |
| Hand-cut property in TD | A | A |
| Hand-cut property in MD | A | A |
| Hand-cut property of laminate film in TD | C | - |
| Hand-cut property of laminate film in MD | C | - |
| Film-forming stability | good | Easily broken in the winding and slitting steps, difficult to film-form |

Note: PET, PBT and IPA mean polyethylene terephthalate, polybutylene terephthalate and isophthalic acid.

Table 6 (Continued)

| Reference Example | 3 | 4 |
|---|---|---|
| Layer structure | B/A/B | B/A/B |
| Thickness (layer B/layer A/layer B) (μm) | 4/8/4 | 1/14/1 |
| Resin composition of layer A | Blend of 25 parts of PBT and 75 parts of 15 mol% IPA-copolymerized PET | 15 mol% IPA-copolymerized PET |
| Resin composition of layer B | PET | PET |
| Stretching ratio in MD | 3.5 | 3.5 |
| Stretching ratio in TD | 4.4 | 4.4 |
| Heat-treatment temperature (°C) | 235 | 235 |
| Concentration of PBT in layer A (mol%) | 25 | 0 |
| Concentration of IPA in layer A (mol%) | 11 | 15 |
| Melting initiation temperature of layer A (°C) | 195 | 198 |
| Melting point of layer A (°C) | 217 | 220 |
| Melting point of layer B (°C) | 254 | 254 |
| Tensile break strength in MD (MPa) | 120 | 67 |
| Tensile break strength in TD (MPa) | 130 | 70 |
| Edge tear resistance in MD (N) | 76 | 12 |
| Edge tear resistance in TD (N) | 83 | 18 |
| Hand-cut property in TD | B | A |
| Hand-cut property in MD | B | A |
| Hand-cut property of laminate film in TD | C | − |
| Hand-cut property of laminate film in MD | C | − |
| Film-forming stability | good | Easily broken in the winding and slitting steps, difficult to film-form |

Note: PET, PBT and IPA mean polyethylene terephthalate, polybutylene terephthalate and isophthalic acid.

Examples 5:

Pellets of the polyester 5 and pellets of the polyester 8 were respectively melted in two separate extruders, and extruded through a laminating die to form a two-kind/three-layer polyester resin laminate having a layer structure composed of polyester 5 (layer B)/polyester 8 (layer A)/polyester 5 (layer B). The thus extruded laminate was fed onto a cooling drum maintained at a surface temperature of 30°C and rapidly cooled thereon, to obtain an unstretched film having a thickness of about 250 $\mu$m. Next, the unstretched film was stretched at 70°C 3.5 times in the longitudinal direction (MD) thereof, preheated in a tenter, stretched again at 80°C 4.4 times in the transverse direction (TD) thereof, and then heat-treated at 230°C for 5 sec, thereby a laminated polyester film having a thickness of 16 $\mu$m. The thicknesses of the layer B, layer A and layer B of the obtained laminated polyester film were 1 $\mu$m, 14 $\mu$m and 1 $\mu$m, respectively. Various properties of the thus obtained film are shown in Table 7 below. As a result, it was confirmed that the resultant film exhibited a good hand cut-off property and the laminate film exhibited good transparency.

Example 6:

The same procedure as defined in Example 5 was conducted except that the polyester 9 was used as a raw material of the layer A to obtain a laminated polyester film. Various properties of the thus obtained film are shown in Table 7 below. As a result, it was confirmed that the resultant film exhibited a good hand cut-off property and the laminate film exhibited good transparency.

Example 7:

The same procedure as defined in Example 5 was conducted except that the polyester 6 was used as a raw material of the layer A and in the heat-treatment after the stretching in transverse direction the heat-treatment temperature was changed to 235°C, to obtain a laminated polyester film. Various properties of the thus obtained film are shown in Table 7 below. As a result, it was confirmed that the resultant film exhibited a good hand cut-off property and the laminate film exhibited good transparency.

Example 8:

The same procedure as defined in Example 5 was conducted except that the thicknesses of the layer B, layer A and layer B of the polyester film were changed to 5 $\mu$m, 20 $\mu$m and 5 $\mu$m, respectively, to obtain a laminated polyester film. Various properties of the thus obtained film are shown in Table 7 below. As a result, it was confirmed that the resultant film exhibited a good hand cut-off property and the laminate film exhibited good transparency.

Reference Example 5:

The same procedure as defined in Example 5 was conducted except that in the heat-treatment after the stretching in transverse direction the heat-treatment temperature was changed to 220°C to obtain a laminated polyester film. Various properties of the thus obtained film are shown in Table 8 below. As a result, it was confirmed that the resultant film exhibited a good hand cut-off property but the laminate film exhibited poor transparency.

Reference Example 6:

The same procedure as defined in Example 5 was conducted except that the polyester 2 was used as a raw material of the layer A and in the heat-treatment after the stretching in transverse direction the heat-treatment temperature was changed to 220°C, to obtain a laminated polyester film. Various properties of the thus obtained film are shown in Table 8 below. As a result, it was confirmed that the resultant film exhibited a good hand cut-off property but the laminate film exhibited poor transparency.

Reference Example 7:

The same procedure as defined in Example 1 was conducted except that the polyester 4 was used as a raw material of the layer A and in the heat-treatment after the stretching in transverse direction the heat-treatment temperature was changed to 220°C, to obtain a laminated polyester film. Various properties of the thus obtained film are shown in Table 8 below. As a result, it was confirmed that the laminate film exhibited good transparency but the r laminate film exhibited a poor hand cut-off property.

Table 7

| Example | 5 | 6 |
|---|---|---|
| Layer structure | B/A/B | B/A/B |
| Thickness (layer B/layer A/layer B) ($\mu$m) | 1/14/1 | 1/14/1 |
| Resin composition of layer A | 100 parts of chips obtained from kneaded material comprising PBT, PET and 22 mol% IPA-copolymerized PET at ratio of 1:1:2 | 100 parts of chips obtained from kneaded material comprising PBT and 15 mol% IPA-copolymerized PET at ratio of 1:3 |
| Resin composition of layer B | PET | PET |
| Heat-treatment temperature (°C) | 230 | 230 |
| Concentration of PBT in layer A (mol%) | 25 | 25 |
| Concentration of IPA in layer A (mol%) | 11 | 11 |
| Melting initiation temperature of layer A (°C) | 195 | 185 |
| Melting point of layer A (°C) | 217 | 216 |
| Melting point of layer B (°C) | 254 | 254 |
| Tensile break strength in MD (MPa) | 68 | 60 |
| Tensile break strength in TD (MPa) | 70 | 64 |
| Edge tear resistance in MD (N) | 30 | 16 |
| Edge tear resistance in TD (N) | 35 | 20 |
| Hand-cut property | A | A |
| Crystallization temperature (°C) | 129 | 131 |
| Haze (%) | 2.0 | 2.0 |
| Transparency after extrusion-laminating | A | A |

Note: PET, PBT and IPA mean polyethylene terephthalate, polybutylene terephthalate and isophthalic acid.

Table 7 (Continued)

| Example | 7 | 8 |
|---|---|---|
| Layer structure | B/A/B | B/A/B |
| Thickness (layer B/layer A/layer B) (μm) | 1/14/1 | 5/20/5 |
| Resin composition of layer A | Blend of 25 parts of PBT and 75 parts of 15 mol% IPA-copolymerized PET | 100 parts of chips obtained from kneaded material comprising PBT, PET and 22 mol% IPA-copolymerized PET at ratio of 1:1:2 |
| Resin composition of layer B | PET | PET |
| Heat-treatment temperature (°C) | 235 | 230 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 65 | 80 |
| Tensile break strength in TD (MPa) | 66 | 85 |
| Edge tear resistance in MD (N) | 25 | 48 |
| Edge tear resistance in TD (N) | 28 | 50 |
| Hand-cut property | A | A |
| Crystallization temperature (°C) | 127 | 129 |
| Haze (%) | 2.0 | 2.2 |
| Transparency after extrusion-laminating | A | A |

Note: PET, PBT and IPA mean polyethylene terephthalate, polybutylene terephthalate and isophthalic acid.

Table 8

| Reference Example | 5 | 6 | 7 |
|---|---|---|---|
| Layer structure | B/A/B | B/A/B | B/A/B |
| Thickness (layer B/layer A/ layer B) ($\mu$m) | 1/14/1 | 1/14/1 | 1/14/1 |
| Resin composition of layer A | 100 parts of chips obtained from kneaded material comprising PBT, PET and 22 mol% IPA-copolymerized PET at ratio of 1:1:2 | 100 parts of 15 mol% IPA-copolymerized PET | 100 parts of PET |
| Resin composition of layer B | PET | PET | |
| Heat-treatment temperature (°C) | 220 | 220 | 235 |
| Concentration of PBT in layer A (mol%) | 25 | 0 | 0 |
| Concentration of IPA in layer A (mol%) | 11 | 15 | 0 |
| Melting initiation temperature of layer A (°C) | 195 | 195 | 242 |
| Melting point of layer A (°C) | 217 | 220 | 254 |
| Melting point of layer B (°C) | 254 | 254 | |
| Tensile break strength in MD (MPa) | 65 | 68 | 220 |
| Tensile break strength in TD (MPa) | 68 | 75 | 220 |
| Edge tear resistance in MD (N) | 40 | 40 | 120 |
| Edge tear resistance in TD (N) | 44 | 42 | 110 |
| Hand-cut property | A | A | C |
| Crystallization temperature (°C) | 116 | 121 | 135 |
| Haze (%) | 2.0 | 2.7 | 3.0 |
| Transparency after extrusion-laminating | C | C | A |
| Note: PET, PBT and IPA mean polyethylene terephthalate, polybutylene terephthalate and isophthalic acid. | | | |

Example 9:

Pellets of the polyester 5 and pellets of the polyester 6 were respectively melted in two separate extruders, and extruded through a laminating die to form a two-kind/three-layer polyester resin laminate having a layer structure composed of polyester 5 (layer B)/polyester 6 (layer A)/polyester 5 (layer B). The thus extruded laminate was fed onto a cooling drum maintained at a surface temperature of 30°C and rapidly cooled thereon, to obtain an unstretched film having a thickness of about 290 $\mu$m. Next, the unstretched film was stretched at 70°C 4.0 times in the longitudinal direction (MD) thereof, preheated in a tenter, stretched again at 80°C 4.5 times in the transverse direction (TD) thereof, and then heat-treated at 235°C for 5 sec, thereby a laminated polyester film having a thickness of 16 $\mu$m. The thicknesses of the layer B, layer A and layer B of the obtained laminated polyester film were 1.0 $\mu$m, 14.0 $\mu$m and 1.0 $\mu$m, respectively. Various properties of the thus obtained film are shown in Table 9 below. As a result, it was confirmed that the resultant film exhibited a good hand cut-off property and a laminate film exhibited also a good hand cut-off property.

Example 10:

The same procedure as defined in Example 9 was conducted except that the thicknesses of the layer B, layer A and layer B of the polyester film were changed to 2.0 $\mu$m, 28.0 $\mu$m and 2.0 $\mu$m, respectively, to obtain a laminated polyester film. Various properties of the thus obtained film are shown in Table 9 below. As a result, it was confirmed that the resultant film exhibited a good hand cut-off property and a laminate film exhibited also a good hand cut-off property.

Example 11:

The same procedure as defined in Example 9 was conducted except that the unstretched film was stretched 3.5 times in the longitudinal direction thereof and stretched 4.4 times in the transverse direction thereof, to obtain a laminated polyester film. Various properties of the thus obtained film are shown in Table 9 below. As a result, it was confirmed that the resultant film exhibited a good hand cut-off property and a laminate film exhibited also a good hand cut-off property.

Example 12:

The same procedure as defined in Example 11 was conducted except that the polyester 7 was used as a raw material of the layer A to obtain a laminated polyester film. Various properties of the thus obtained film are shown in Table 9 below. As a result, it was confirmed that the resultant film exhibited a good hand cut-off property and a laminate film exhibited also a good hand cut-off property.

Example 13:

The same procedure as defined in Example 9 was conducted except that the polyester 10 was used as a raw material of the layer A to obtain a laminated polyester film. Various properties of the thus obtained film are shown in Table 10 below. As a result, it was confirmed that the resultant film exhibited a good hand cut-off property and a laminate film exhibited also a good hand cut-off property.

Reference Example 8:

The same procedure as defined in Example 9 was conducted except that the thicknesses of the layer B, layer A and layer B of the polyester film were changed to 2.5 $\mu$m, 11.0 $\mu$m and 2.5 $\mu$m, respectively, to obtain a laminated polyester film. Various properties of the thus obtained film are shown in Table 10 below. As a result, it was confirmed that the resultant single film exhibited a good hand cut-off property but a laminate film exhibited a poor hand cut-off property.

Reference Example 9:

The same procedure as defined in Example 11 was conducted except that the stretched film was heat-treated at 205°C, to obtain a laminated polyester film. Various properties of the thus obtained film are shown in Table 10 below. As a result, it was confirmed that the resultant single film exhibited a good hand cut-off property but a laminate film exhibited a poor hand cut-off property.

Reference Example 10:

The same procedure as defined in Example 11 was conducted except that the unstretched film was stretched 3.5 times in the longitudinal direction thereof and stretched 4.4 times in the transverse direction thereof, and the thicknesses of the layer B, layer A and layer B of the polyester film were changed to 2.0 $\mu$m, 12.0 $\mu$m and 2.0 $\mu$m, respectively, to obtain a laminated polyester film. Various properties of the thus obtained film are shown in Table 11 below. As a result, it was confirmed that the resultant single film exhibited a good hand cut-off property and also a laminate film exhibited a good hand cut-off property in the longitudinal direction only. However, the laminate film exhibited insufficient hand cut-off property in the transverse direction.

Reference Example 11:

The same procedure as defined in Example 9 was conducted except that the unstretched film was stretched 3.3 times in the longitudinal direction thereof and stretched 4.6 times in the transverse direction thereof, to obtain a laminated polyester film. Various properties of the thus obtained film are shown in Table 11 below. As a result, it was confirmed that the resultant single film exhibited a good hand cut-off property and also a laminate film exhibited a good hand cut-off property in the longitudinal direction only. However, the laminate film exhibited insufficient hand cut-off property in the transverse direction.

Reference Example 12:

The same procedure as defined in Example 10 was conducted except that the polyester 2 was used as a raw material of the layer A, to obtain a laminated polyester film. Various properties of the thus obtained film are shown in Table 11 below. As a result, the film was easily broken in the winding and slitting steps and it was difficult to form a film.

Table 9

| Example | 9 | 10 |
|---|---|---|
| Layer structure | B/A/B | B/A/B |
| Thickness (layer B/layer A/layer B) (μm) | 1/14/1 | 2/28/2 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 4.0 | 4.0 |
| Stretching ratio in TD | 4.5 | 4.5 |
| Heat-treatment temperature (°C) | 235 | 235 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 75 | 74 |
| Tensile break strength in TD (MPa) | 77 | 78 |
| Tensile break elongation in MD (%) | 5 | 6 |
| Tensile break elongation in TD (%) | 5 | 10 |
| Edge tear resistance in MD (N) | 12 | 7 |
| Edge tear resistance in TD (N) | 15 | 7 |
| Hand-cut property in TD | A | A |
| Hand-cut property in MD | A | A |
| Hand-cut property of laminate film in TD | A | A |
| Hand-cut property of laminate film in MD | A | A |
| Film-forming stability | good | good |

Note: PET, PBT and IPA mean polyethylene terephthalate, polybutylene terephthalate and isophthalic acid.

Table 9 (Continued)

| Example | 11 | 12 |
|---|---|---|
| Layer structure | B/A/B | B/A/B |
| Thickness (layer B/layer A/layer B) (μm) | 1/14/1 | 1/14/1 |
| Resin composition of layer A | Blend of 25 parts of PBT and 75 parts of 15 mol% IPA-copolymerized PET | Blend of 25 parts of PBT and 75 parts of 22 mol% IPA-copolymerized PET |
| Resin composition of layer B | PET | PET |
| Stretching ratio in MD | 3.5 | 3.5 |
| Stretching ratio in TD | 4.4 | 4.4 |
| Heat-treatment temperature (°C) | 235 | 235 |
| Concentration of PBT in layer A (mol%) | 25 | 25 |
| Concentration of IPA in layer A (mol%) | 11 | 17 |
| Melting initiation temperature of layer A (°C) | 195 | 200 |
| Melting point of layer A (°C) | 217 | 211, 220 |
| Melting point of layer B (°C) | 254 | 254 |
| Tensile break strength in MD (MPa) | 65 | 60 |
| Tensile break strength in TD (MPa) | 66 | 62 |
| Tensile break elongation in MD (%) | 5 | 6 |
| Tensile break elongation in TD (%) | 30 | 6 |
| Edge tear resistance in MD (N) | 25 | 18 |
| Edge tear resistance in TD (N) | 28 | 22 |
| Hand-cut property in TD | A | A |
| Hand-cut property in MD | A | A |
| Hand-cut property of laminate film in TD | A | A |
| Hand-cut property of laminate film in MD | A | A |
| Film-forming stability | good | good |

Note: PET, PBT and IPA mean polyethylene terephthalate, polybutylene terephthalate and isophthalic acid.

Table 10

| Example | 13 |
|---|---|
| Layer structure | B/A/B |
| Thickness (layer B/layer A/layer B) (μm) | 1/14/1 |
| Resin composition of layer A | Blend of 10 parts of PBT and 90 parts of 15 mol% IPA-copolymerized PET |
| Resin composition of layer B | PET |
| Stretching ratio in MD | 3.5 |
| Stretching ratio in TD | 4.4 |
| Heat-treatment temperature (°C) | 235 |
| Concentration of PBT in layer A (mol%) | 10 |
| Concentration of IPA in layer A (mol%) | 14 |
| Melting initiation temperature of layer A (°C) | 195 |
| Melting point of layer A (°C) | 217 |
| Melting point of layer B (°C) | 254 |
| Tensile break strength in MD (MPa) | 72 |
| Tensile break strength in TD (MPa) | 74 |
| Tensile break elongation in MD (%) | 4 |
| Tensile break elongation in TD (%) | 4 |
| Edge tear resistance in MD (N) | 8 |
| Edge tear resistance in TD (N) | 10 |
| Hand-cut property in TD | A |
| Hand-cut property in MD | A |
| Hand-cut property of laminate film in TD | A |
| Hand-cut property of laminate film in MD | A |
| Film-forming stability | good |

Note: PET, PBT and IPA mean polyethylene terephthalate, polybutylene terephthalate and isophthalic acid.

Table 10 (Continued)

| Reference Example | 8 | 9 |
|---|---|---|
| Layer structure | B/A/B | B/A/B |
| Thickness (layer B/layer A/layer B) (μm) | 2.5/11/2.5 | 1/14/1 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 4.0 | 3.5 |
| Stretching ratio in TD | 4.5 | 4.4 |
| Heat-treatment temperature (°C) | 235 | 205 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 85 | 90 |
| Tensile break strength in TD (MPa) | 90 | 95 |
| Tensile break elongation in MD (%) | 75 | 95 |
| Tensile break elongation in TD (%) | 80 | 90 |
| Edge tear resistance in MD (N) | 44 | 55 |
| Edge tear resistance in TD (N) | 46 | 58 |
| Hand-cut property in TD | A | A |
| Hand-cut property in MD | A | A |
| Hand-cut property of laminate film in TD | B | C |
| Hand-cut property of laminate film in MD | C | C |
| Film-forming stability | good | good |

Note: PET, PBT and IPA mean polyethylene terephthalate, polybutylene terephthalate and isophthalic acid.

Table 11

| Reference Example | 10 | 11 |
|---|---|---|
| Layer structure | B/A/B | B/A/B |
| Thickness (layer B/layer A/layer B) (μm) | 2/12/2 | 1/14/1 |
| Resin composition of layer A | Blend of 25 parts of PBT and 75 parts of 15 mol% IPA-copolymerized PET | Blend of 25 parts of PBT and 75 parts of 15 mol% IPA-copolymerized PET |
| Resin composition of layer B | PET | PET |
| Stretching ratio in MD | 3.5 | 3.3 |
| Stretching ratio in TD | 4.4 | 4.6 |
| Heat-treatment temperature (°C) | 235 | 205 |
| Concentration of PBT in layer A (mol%) | 25 | 25 |
| Concentration of IPA in layer A (mol%) | 11 | 11 |
| Melting initiation temperature of layer A (°C) | 195 | 195 |
| Melting point of layer A (°C) | 217 | 217 |
| Melting point of layer B (°C) | 254 | 254 |
| Tensile break strength in MD (MPa) | 75 | 60 |
| Tensile break strength in TD (MPa) | 77 | 65 |
| Tensile break elongation in MD (%) | 20 | 7 |
| Tensile break elongation in TD (%) | 105 | 110 |
| Edge tear resistance in MD (N) | 28 | 20 |
| Edge tear resistance in TD (N) | 35 | 37 |
| Hand-cut property in TD | A | A |
| Hand-cut property in MD | A | A |
| Hand-cut property of laminate film in TD | A | A |
| Hand-cut property of laminate film in MD | B | B |
| Film-forming stability | good | good |

Note: PET, PBT and IPA mean polyethylene terephthalate, polybutylene terephthalate and isophthalic acid.

Table 11 (Continued)

| Reference Example | 12 |
|---|---|
| Layer structure | B/A/B |
| Thickness (layer B/layer A/layer B) (μm) | 1/14/1 |
| Resin composition of layer A | 15 mol% IPA-copolymerized PET |
| Resin composition of layer B | PET |
| Stretching ratio in MD | 4.0 |
| Stretching ratio in TD | 4.5 |
| Heat-treatment temperature (°C) | 235 |
| Concentration of PBT in layer A (mol%) | 0 |
| Concentration of IPA in layer A (mol%) | 15 |
| Melting initiation temperature of layer A (°C) | 198 |
| Melting point of layer A (°C) | 220 |
| Melting point of layer B (°C) | 254 |
| Tensile break strength in MD (MPa) | 70 |
| Tensile break strength in TD (MPa) | 72 |
| Tensile break elongation in MD (%) | 5 |
| Tensile break elongation in TD (%) | 6 |
| Edge tear resistance in MD (N) | 12 |
| Edge tear resistance in TD (N) | 18 |
| Hand-cut property in TD | A |
| Hand-cut property in MD | A |
| Hand-cut property of laminate film in TD | - |
| Hand-cut property of laminate film in MD | - |
| Film-forming stability | Easily broken in the winding and slitting steps, difficult to film-forming |

Note: PET, PBT and IPA mean polyethylene terephthalate, polybutylene terephthalate and isophthalic acid.

Although the present invention is described above with respect to embodiments which are considered to be most practical and preferable at the present time, the present invention is not limited to these embodiments, and various changes and modifications will be appropriately made within the scope of claims and a whole of a specification of this application unless departing from the subject matter and concept of the present invention, and it should be construed that the changes and modifications are involved within a technical range of the present invention. The present invention is based on Japanese Patent Application No. 2004-234262 filed on August 11, 2004, Japanese Patent Application No. 2004-234441 filed on August 11, 2004 and Japanese Patent Application No. 2004-368828 filed on December 21, 2004; and the whole content thereof can be incorporated by reference.

**Claims**

1. A biaxially stretched polyester film comprising a polyester layer (layer A) which comprises butylene terephthalate units and has a melting point of not higher than 240°C, said biaxially stretched polyester film satisfying such properties that an edge tear resistance in longitudinal direction is smaller than an edge tear resistance in width direction and the edge tear resistances in each of longitudinal and width directions are not more than 40N.

2. A biaxially stretched polyester film having a crystallization temperature (Tc) of not lower than 125°C and edge tear resistances of not more than 80N in each of longitudinal and width directions.

3. A biaxially stretched polyester film comprising a polyester layer (layer A) comprising butylene terephthalate units and polyester layers (layer B) which are laminated on the both surfaces of the layer A and has a melting point higher 10°C or more, than the melting point of the layer A, said biaxially stretched polyester film satisfying such properties that edge tear resistances in each of longitudinal and width directions are not more than 80N and the tensile break elongation is not more than 50%.

## INTERNATIONAL SEARCH REPORT

International application No.

PCT/JP2005/014553

| A. CLASSIFICATION OF SUBJECT MATTER |
|---|
| Int.Cl$^7$  C08J5/18, B32B27/36//C08L67:00 |

According to International Patent Classification (IPC) or to both national classification and IPC

| B. FIELDS SEARCHED |
|---|
| Minimum documentation searched (classification system followed by classification symbols) |
| Int.Cl$^7$  C08J5/18, B32B27/36, C08L67/00 |

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2004-136448 A  (Mitsubishi Polyester Film Corp.), 13 May, 2004 (13.05.04), Claims; page 5, Par. No. [0022]; page 7, table 1, example 3 (Family: none) | 1-3 |
| Y | JP 52-126392 A  (Teijin Ltd.), 24 October, 1977 (24.10.77), Claims; page 4, table 1 (Family: none) | 1-3 |
| Y | JP 2002-337285 A  (Toyobo Co., Ltd.), 27 November, 2002 (27.11.02), Claims; page 4, Par. Nos. [0023] to [0025]; page 5, table 1 (Family: none) | 1-3 |

☒ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 14 September, 2005 (14.09.05) | 04 October, 2005 (04.10.05) |

| Name and mailing address of the ISA/ Japanese Patent Office | Authorized officer |
|---|---|
| Facsimile No. | Telephone No. |

Form PCT/ISA/210 (second sheet) (January 2004)

**INTERNATIONAL SEARCH REPORT**

| International application No. |
| --- |
| PCT/JP2005/014553 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2004-216824 A  (Unitika Ltd.),<br>05 August, 2004 (05.08.04),<br>Claims; page 6, Par. Nos. [0023] to [0024];<br>page 11, table 1<br>(Family: none) | 1-3 |
| X | JP 2003-064202 A  (Unitika Ltd.),<br>05 March, 2003 (05.03.03),<br>Claims; pages 3 to 4, Par. Nos. [0013] to<br>[0015]; pages 4 to 5, Par. Nos. [0023] to<br>[0025]; page 5, table 1<br>(Family: none) | 2 |
| A | JP 2000-318035 A  (Unitika Ltd.),<br>21 November, 2000 (21.11.00),<br>Claims<br>(Family: none) | 1-3 |
| A | JP 2003-311906 A  (Toyobo Co., Ltd.),<br>06 November, 2003 (06.11.03),<br>Claims; page 5, Par. Nos. [0027] to [0030]<br>(Family: none) | 1-3 |
| P,A | JP 2005-112886 A  (Mitsubishi Polyester Film<br>Corp.),<br>28 April, 2005 (28.04.05),<br>Claims; page 9, table 1<br>(Family: none) | 1-3 |
| P,A | WO 2005/049701 A1  (Mitsubishi Polyester Film<br>Corp.),<br>02 June, 2005 (02.06.05),<br>Claims; tables 1, 2<br>& JP 2005-146158 A | 1-3 |
| E,A | JP 2005-225936 A  (Mitsubishi Polyester Film<br>Corp.),<br>25 August, 2005 (25.08.05),<br>Claims; page 10, tables 1, 2<br>(Family: none) | 1-3 |

Form PCT/ISA/210 (continuation of second sheet) (January 2004)

## INTERNATIONAL SEARCH REPORT

| International application No. |
|---|
| PCT/JP2005/014553 |

**Box No. II**      **Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III**      **Observations where unity of invention is lacking (Continuation of item 3 of first sheet)**

This International Searching Authority found multiple inventions in this international application, as follows:

The films of claims 1-3 expressed in independent form substantially relate to biaxially oriented polyester films having in common only tearability of edge-tear resistance of 40N or below or 80N or below. However, such constitution is one publicly known prior to the filing of this application, so that the constitution is not considered as technical features that define a contribution which each of the inventions makes over the prior art. Further, the matters (except edge-tear resistance) to define the invention, namely, presence of butylene terephthalate units, melting point and crystallization temperature of film, and specification of the layer to be laminated are not considered      (continued to extra sheet)

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**      ☐ The additional search fees were accompanied by the applicant's protest.

                                        ☐ No protest accompanied the payment of additional search fees.

Form PCT/ISA/210 (continuation of first sheet (2)) (January 2004)

**INTERNATIONAL SEARCH REPORT**

International application No.

PCT/JP2005/014553

Continuation of Box No.III of continuation of first sheet(2)

as matters recognized by a person skilled in the art at the time of filing as being closely related.

Form PCT/ISA/210 (extra sheet) (January 2004)

**REFERENCES CITED IN THE DESCRIPTION**

**Patent documents cited in the description**

- JP 55008551 A
- JP 56050692 A
- JP 55020514 A
- JP 5104618 A
- JP 2004202702 A
- JP 2003155403 A
- JP 2003220678 A
- JP 2004234262 A
- JP 2004234441 A
- JP 2004368828 A